# EUROPÄISCHE PATENTSCHRIFT

(11) **EP 2 311 769 B1**
(45) Veröffentlichungstag und Bekanntmachung des Hinweises auf die Patenterteilung: **08.04.2015**
(21) Anmeldenummer: 10187374.3
(22) Anmeldetag: 13.10.2010
(51) Int. Cl.: B66B 13/14, B66B 1/24, B66B 1/30

(54) **Verfahren zur Steuerung eines Aufzugs und einer Aufzugsgruppe**
Method for controlling a lift and a lift group
Procédé de commande d'un ascenseur et d'un groupe d'ascenseur

(30) Priorität: 13.10.2009 DE 102009049267
(43) Veröffentlichungstag der Anmeldung: 20.04.2011
(73) Patentinhaber: K-Solutions GmbH, 53925 Kall (DE)
(72) Erfinder: Kollmorgen, Lars Rudolf, 50996 Köln (DE)
(74) Vertreter: von Hirschhausen, Helge

(56) Entgegenhaltungen:
- EP-A1- 0 968 953
- EP-A1- 1 553 038
- WO-A1-2005/000726
- GB-A- 2 111 244
- JP-A- 5 338 970
- US-A- 5 235 143
- US-A- 5 286 930
- US-A1- 2007 295 566

## Beschreibung

Die vorliegende Erfindung betrifft verschiedene Verfahren zur Steuerung wenigstens eines Aufzuges bzw. einer Aufzugsgruppe mit wenigstens jeweils einer Aufzugskabine und einer Steuerung.

Oftmals besteht für den Betreiber bzw. Hersteller ein erhöhter Zeitdruck bei der Fertigstellung und Übergabe eines Aufzugs- bzw. einer Aufzugsgruppe. Insofern wird ein Aufzug bei seiner Installation und Inbetriebnahme in Bezug auf sein Betriebsverhalten an hand von voreingestellten Defaultwerten vorprogrammiert bzw. vorparametriert. Es gibt jedoch Einstellungen, die sich erst im Aufzugsbetrieb optimal einstellen lassen. Letztlich muss der Monteur die Zeit haben, diese Faktoren zu ermitteln, zu analysieren und bei den Justagen zu berücksichtigen. Dies geschieht oftmals jedoch aufgrund des Zeitdruckes bzw. aufgrund mangelnder Kenntnisse über die tatsächliche, spätere Nutzungssituation der Anlage nicht.

Aus dem Stand der Technik sind Aufzugsanlagen bekannt, bei denen die Türöffnungszeiten anhand erfasster Parameter optimiert werden (z.B. JP 5 338970 A, US5,235,143 A oder US 5,286,930 A).

Im Stand der Technik werden auch Aufzugsanlagen gezeigt, die in einen Energiesparmodus versetzt werden könne, wobei hier zum Beispiel das Verkehrsaufkommen als Grundlage dient (z.B. EP 1 553 038 A1 oder GB 2 111 244 A). So zeigt die US 2007/0295566 A1 eine Nachrüstlösung für bestehende Aufzugsanlagen, die zum Energiesparen die Kabinenbeleuchtung abschaltet.

Der Erfindung liegt daher die Aufgabe zugrunde, wenigstens ein Verfahren zur Steuerung eines Aufzugs bzw. einer Aufzugsgruppe anzugeben, mit dem die tatsächliche Nutzungssituation der Aufzugsanlage noch besser berücksichtigt werden kann.

Die Lösung dieser Aufgabe gelingt mit den Verfahren zur Steuerung eines Aufzugs gemäß den nebengeordneten Ansprüchen 1, 9. Vorteilhafte Weiterbildungen der Erfindung werden in den Unteransprüchen beschrieben.

Die Lösung der Aufgabe gelingt also durch ein Verfahren zur Steuerung eines Aufzugs mit einer Aufzugskabine mit wenigstens einer Aufzugstüre und einer Steuerung, die die Aufzugstüre so ansteuert, dass diese in einer Haltestelle für die Dauer eines in der Steuerung abgelegten Sollwertes für die Türöffnungszeit geöffnet wird. Erfindungsgemäß wird hierbei wenigstens eine Türöffnungszeit haltestellenspezifisch optimiert, in dem für wenigstens eine Haltestelle eine Türumkehr-Zeitspanne zwischen Erledigung eines Außenrufs und Erhalt eines darauf folgenden Innenrufs von der Steuerung als Messwert erfasst und mit dem Sollwert für die Türöffnungszeit verglichen wird. Die Differenz zwischen Messwert und Sollwert wird zur Korrektur des Sollwertes für die folgende Türöffnungszeit mit dem aktuell in der Steuerung abgelegten Sollwert für die Türöffnungszeit addiert. Beträgt die Türöffnungszeit bei der ersten Fahrt z.B. 5 Sekunden und wird eine Türumkehr-Zeitspanne von 4 Sekunden von der Steuerung erfasst, so ergibt sich eine negative Differenz zwischen Messwert und Sollwert von 1 Sekunde. Diese negative Differenz wird nun auf den ursprünglichen Sollwert der Türöffnungszeit an dieser Haltestelle addiert, so dass ein neuer, korrigierter Sollwerte für die folgende Türöffnungszeit von 4 Sekunde eingestellt wird.

Da es Aufzüge gibt, die in ihrer Kabine beispielweise mehrere Aufzugstüren haben, ist es zweckmäßig, wenn die Optimierung der Türöffnungszeit für jede Aufzugstür durchgeführt wird. Ferner ist es sinnvoll, wenn die Türöffnungszeit für jede Haltestelle individuell optimiert wird. Dadurch gelingt eine sehrgute bedarfsorientierte Anpassung der Türöffnungszeit. Dies ermöglicht es auch die Unterschiede zwischen stark und weniger stark frequentierten Haltestellen zur Optimierung der Förderkapazität des Aufzuges heranzuziehen.

Zur Optimierung der Türöffnungszeit wird neben der Türumkehr-Zeitspanne wenigstens ein weiterer Kennwert erfasst und von der Steuerung ausgewertet. Als weiterer Kennwert kann beispielsweise die Häufigkeit von Lichtschrankenunterbrechungen an der wenigstens einen Aufzugstüre erfasst und von der Steuerung ausgewertet werden. Auch kann die Häufigkeit des Ansprechens von Reversierkontakten an den Aufzugstüren an der wenigstens einen Haltestelle erfasst und von der Steuerung als weiterer Kennwert ausgewertet werden.

Um eine besonders gute, bedarfsgerechte Anpassung der Türöffnungszeiten vornehmen zu können, erfolgt die Optimierung der Türöffnungszeit in Abhängigkeit der Tageszeit, des Datum und/oder der Jahreszeit. Hierbei können für die jeweilige Tageszeit, das Datum und/oder die Jahreszeit Schätzwerte verwendet werden. Besser ist jedoch die Optimierung der Türöffnungszeit in Abhängigkeit einer von der Steuerung erfassten Verkehrsstatistik des Aufzugs. Diese orientiert sich an den dann tatsächlich auftretenden Bedürfnissen der Benutzer der Aufzugsanlage.

Um sicherzustellen, dass die Optimierung der Türöffnungszeit nicht auf einen derart geringen Wert absinkt, dass es auch einem sehr flink handelnden Benutzer nicht mehr möglich ist, in die Aufzugskabine zu gelangen, wird zweckmäßigerweise die Optimierung der Türöffnungszeit durch einen Mindestsollwert für die Türöffnungszeit begrenzt.

Auch ist es sinnvoll, wenn der Sollwert für die nächste Türöffnungszeit um ein vordefiniertes Maß vergrößert wird, wenn innerhalb einer vordefinierten Zeitspanne nach Absetzen eines Außenrufs kein Innenruf erfolgt. Dann kann man annehmen, dass es den Benutzern des Aufzugs offensichtlich nicht gelungen ist, innerhalb der gewählten Türöffnungszeit in die Kabine zu gelangen.

Ferner ist es zweckmäßig, wenn der Sollwert für die nächste Türöffnungszeit um ein vordefiniertes Maß vergrößert wird, wenn innerhalb einer vordefinierten Zeitspanne nach Absetzen eines Au-ßenrufs ein erhöhtes Ansprechen von Lichtschranken und/oder Reversierkontakten ermittelt wird. Ein erhöhtes Ansprechen von Lichtschranken oder Reversierkontakten ist ebenfalls ein Indiz dafür, dass die Türöffnungszeit für die Benutzer zu knapp bemessen ist und es offensichtlich zu Unterbrechungen des Türschließvorgangs gekommen ist.

Zudem wird die Aufgabe durch ein Verfahren gemäß Anspruch 9 zur Steuerung wenigstens eines Aufzuges gelöst, bei dem die Steuerung den Aufzug so ansteuert, dass dieser in wenigstens einen Energiesparmodus versetzt werden kann, wobei durch die Steuerung eine Verkehrsstatistik über die Häufigkeit von Fahraufträgen erstellt wird, die zur Optimierung des Aktivierungs- bzw. Deaktivierungszeitpunktes des wenigstens einen Energiesparmodus des Aufzuges verwendet wird.

Dies ist deshalb vorteilhaft, weil die Aufzugssteuerung selber eine Verkehrsstatistik erstellt und so nach einiger Zeit in der Lage ist, den Betrieb des Aufzuges in Bezug auf seinen Energieverbrauch unter Vermeidung von Komforteinbußen für einen Großteil seiner Benutzer zu optimieren. Dies ist gerade auch deshalb vorteilhaft, weil diese Adaption der Steuerung an die Nutzungssituation vor Ort oft nicht durch Angabe der Betreiber des Aufzuges im Vorfeld zuverlässig abgeschätzt werden kann. Viele Aufzugsbetreiber wissen im nicht, wann ihr Aufzug ohne Komfortverlust abgeschaltet werden kann. Somit kann eine aufwendige Nachsorge der Aufzugssteuerung nach der Inbetriebnahme entfallen.

Auch kann die Steuerung den Aufzug in Abhängigkeit der Betriebsstatistik in unterschiedliche Energiesparmodi versetzen etwa einen ersten Energiesparmodus bei dem Verbraucher wie das Kabinenlicht, Anzeigen, Lüfter abgeschaltet werden, die schnell wieder angeschaltet werden können. Ist aufgrund der Verkehrsstatistik damit zu rechnen, dass der Aufzug für eine längere Zeit keine Rufe mehr im System eintreffen werden, so kann der Aufzug in einen zweiten Energiesparmodus versetzt werden, bei dem Verbraucher abgeschaltet werden, die beim erneuten Anfahren der Systeme länger brauchen. Hierzu gehören Teile der Elektronik, der Aufzugssteuerung, der Türsteuerung, der Frequenzumrichter und ähnliches.

Weiterbildend werden zur Optimierung des Energieverbrauchs unterschiedliche Energiesparmodi in Abhängigkeit der Verkehrsstatistik aktiviert bzw. deaktiviert.

Zweckmäßiger Weise werden die Aufzüge einer Aufzugsgruppe in Abhängigkeit der Betriebsstatistik kaskadiert in Energiesparmodi versetzt. So kann ein Aufzug bereits in einem Energiesparmodus versetzt worden sein, während sich ein anderer Aufzug noch im normalen Betriebszustand befindet.

Sinnvoller Weise wird die Förderkapazität in Abhängigkeit einer von der Steuerung ermittelten Verkehrsstatistik der Aufzugsgruppe optimiert. So kann die Zahl der abzuschaltenden bzw. in einen Energiesparmodus zu versetzenden Aufzüge in Abhängigkeit der voraussichtlich in der folgenden Zeitspanne benötigten Förderkapazität gewählt werden. Hierbei ist es gut, wenn die Optimierung der Förderkapazität unter Berücksichtigung der Größe der Aufzugskabinen erfolgt und/oder der Lage der Aufzugskabinen in Relation zum für die Durchführung eines Fahrtauftrages notwendigen Energieverbrauchs. So kann es unter energetischer Betrachtungsweise zweckmäßiger sein, wenn eine Fahrt von einem Aufzug mit einer in Bezug auf die Starthaltestelle entfernter gelegenen Aufzugskabine durchgeführt wird. So kann es unter Betrachtung der Energiebilanz besser sein eine Fahrt aus der Mitte eines Gebäudes ins Erdgeschoss mit einer Kabine durchzuführen, die sich im Erdgeschoss befindet, als mit einer Kabine die sich im oberen Bereich des Gebäude befindet, bei der aber während der ganzen Fahrt das Gegengewicht gezogen werden muss, wenn danach der Aufzug die halbe Strecke abwärts nur mit einer Last nahe der Nulllast gefahren werden kann.

## Patentansprüche

1. Verfahren zur Steuerung eines Aufzuges mit einer Aufzugskabine mit wenigstens einer Aufzugstüre und einer Steuerung, die die Aufzugstür so ansteuert, dass diese in einer Haltestelle für die Dauer eines in der Steuerung abgelegten Sollwertes für die Türöffnungszeit geöffnet wird, wobei wenigstens eine Türöffnungszeit haltestellenspezifisch optimiert wird, indem für wenigstens eine Haltestelle eine Türumkehr-Zeitspanne zwischen Erledigung eines Außenrufs und Erhalt eines darauffolgenden Innenrufs von der Steuerung als Messwert erfasst und mit dem Sollwert für die Türöffnungszeit verglichen wird, wobei die Differenz zwischen Messwert und Sollwert zur Korrektur des Sollwertes für die folgende Türöffnungszeit mit dieser addiert wird,
**dadurch gekennzeichnet**,
dass zur Optimierung der Türöffnungsieit neben der Türumkehr-Zeitspanne wenigstens ein weiterer Kennwert erfasst und von der Steuerung ausgewertet wird, wobei als weiterer Kennwert die Häufigkeit von Lichtschrankenunterbrechungen an der wenigstens einen Aufzugstür erfasst und von der Steuerung ausgewertet wird und/oder dass als weiterer Kennwert die Häufigkeit des Ansprechens von Reversierkontakten an den Aufzugstüren an der wenigstens einen Haltestelle erfasst und von der Steuerung ausgewertet wird.

2. Verfahren zur Steuerung eines Aufzuges nach Anspruch 1,
**dadurch gekennzeichnet**,
**dass** die Optimierung der Türöffnungszeit für jede Aufzugstüre durchgeführt wird.

3. Verfahren zur Steuerung eines Aufzuges nach einem der vorhergehenden Ansprüche,
dadurch **gekennzeichnet,**
**dass** die Optimierung der Türöffnungszeit individuell für jede Haltestelle durchgeführt wird.

4. Verfahren zur Steuerung eines Aufzuges nach einem der vorhergehenden Ansprüche,
**dadurch gekennzeichnet**,
dass die Optimierung der Türöffnungszeit in Abhängigkeit der Tageszeit, des Datums und/oder der Jahreszeit erfolgt.

5. Verfahren zur Steuerung eines Aufzuges nach einem der vorhergehenden Ansprüche,
**dadurch gekennzeichnet**,
dass die Optimierung der Türöffnungszeit in Abhängigkeit einer von der Steuerung erfassten Verkehrsstatistik des Aufzuges erfolgt.

6. Verfahren zur Steuerung eines Aufzuges nach einem der vorhergehenden Ansprüche,
**dadurch gekennzeichnet**,
dass die Optimierung der Türöffnungszeit durch einen Mindestsollwert für die Türöffnungszeit begrenzt wird.

7. Verfahren zur Steuerung eines Aufzuges nach einem der vorhergehenden Ansprüche,
dadurch **gekennzeichnet,**
dass der Sollwert für die nächste Türöffnungszeit um ein vordefiniertes Maß vergrößert wird, wenn innerhalb einer vordefinierten Zeitspanne nach Absetzen eines Außenrufs kein Innenruf erfolgt.

8. Verfahren zur Steuerung eines Aufzuges nach einem der vorhergehenden Ansprüche,
**dadurch gekennzeichnet**,
**dass** der Sollwert für die nächste Türöffnungszeit um ein vordefiniertes Maß vergrößert wird, wenn innerhalb einer vordefinierten Zeitspanne nach Absetzen eines Außenrufs ein erhöhtes Ansprechen von Lichtschranken und/oder Reversierkontakten ermittelt wird.

9. Verfahren zur Steuerung wenigstens eines Aufzuges mit einer Steuerung, die den Aufzug so ansteuert, dass dieser in wenigstens einen Energiesparmodus versetzt werden kann,
**dadurch gekennzeichnet**,
dass durch die Steuerung eine Verkehrsstatistik über die Häufigkeit von Fahraufträgen erstellt wird, die zur Optimierung des Aktivierungszeitpunktes des wenigstens einen Energiesparmodus des Aufzuges verwendet wird, wobei im wenigstens einen Energiesparmodus Verbraucher abgeschaltet werden.

10. Verfahren zur Steuerung eines Aufzuges nach einem der vorhergehenden Ansprüche,
**dadurch gekennzeichnet**,
dass zur Optimierung des Energieverbrauchs unterschiedliche Energiesparmodi in Abhängigkeit der Verkehrsstatistik aktiviert werden.

11. Verfahren zur Steuerung eines Aufzuges nach einem der vorhergehenden Ansprüche,
**dadurch gekennzeichnet**,
**dass** die Aufzüge einer Aufzugsgruppe in Abhängigkeit der Betriebsstatistik kaskadiert in Energiesparmodi versetzt werden.

## Claims

1. A method of controlling a lift with a lift car including at least one lift door and a controller, which controls the lift door so that it is opened at a stopping point for the duration of a set value stored in the controller for the door opening time, wherein at least one door opening time is optimised in a manner specific to a stopping point in that for at least one stopping point a door reversal time period between carrying out a landing command and receipt of a subsequent car command is determined by the controller as a measured value and is compared with the set value for the door opening time wherein the difference between the measured value and set value is added to the set value in order to correct it for the subsequent door opening time, **characterised in that** in order to optimise the door opening time, in addition to the door reversal time period at least one further parameter is detected and analysed by the controller, wherein the frequency of light barrier interruptions at the at least one lift door is detected as the further parameter and analysed by the controller and/or that the frequency of the response of reversing contacts at the lift doors at the at least one stopping point is detected as the further parameter and analysed by the controller.

2. A method of controlling a lift as claimed in Claim 1, **characterised in that** the optimisation of the door opening time is carried out for each lift door.

3. A method of controlling a lift as claimed in one of the preceding claims, **characterised in that** the optimisation of the door opening time is carried out individually for each stopping point.

4. A method of controlling a lift as claimed in one of the preceding claims, **characterised in that** the optimisation of the door opening time is effected in dependence on the time of day, the date and/or the season.

5. A method of controlling a lift as claimed in one of the preceding claims, **characterised in that** the optimisation of the door opening time is effected in dependence on a traffic statistic of the lift determined by the controller.

6. A method of controlling a lift as claimed in one of the preceding claims, **characterised in that** the optimisation of the door opening time is limited by a minimum set value for the door opening time.

7. A method of controlling a lift as claimed in one of the preceding claims, **characterised in that** the set value for the next door opening time is increased by a predetermined amount when no car command occurs within a predetermined period of time after transmission of a landing command.

8. A method of controlling a lift as claimed in one of the preceding claims, **characterised in that** the set value for the next door opening time is increased by a predetermined amount when an increased response of light barriers and/or reversing contacts is detected within a predetermined period of time after transmission of a landing command.

9. A method of controlling at least one lift with a controller, which controls the lift so that it can be shifted into at least one energy saving mode, **characterised in that** a traffic statistic relating to the frequency of lift instructions is generated by the controller, which is used to optimise the activation time of the at least one energy saving mode of the lift, wherein consumer loads are switched off in at least one energy saving mode.

10. A method of controlling a lift as claimed in one of the preceding claims, **characterised in that** in order to optimise the energy consumption, different energy saving modes are activated in dependence on the traffic statistic.

11. A method of controlling a lift as claimed in one of the preceding claims, **characterised in that** the lifts of a group of lifts are shifted into energy saving modes in a cascaded fashion in dependence on the operational statistic.

## Revendications

1. Procédé de commande d'un ascenseur avec une cabine d'ascenseur comprenant au moins une porte d'ascenseur et une commande, qui commande la porte d'ascenseur de manière telle que celle-ci est ouverte dans une position d'arrêt pour la durée d'une valeur prescrite enregistrée dans la commande pour la durée d'ouverture de la porte, dans lequel au moins un temps d'ouverture de la porte est optimisé en fonction des position d'arrêt, tandis que pour au moins une position d'arrêt, une période de retour de porte entre l'exécution d'un appel extérieur et la réception d'un appel intérieur consécutif est détectée par la commande comme valeur de mesure et est comparée à la valeur prescrite pour le moment d'ouverture de porte, dans lequel la différence entre la valeur de mesure et la valeur prescrite afin de corriger la valeur prescrite est ajoutée à celle-ci pour le temps d'ouverture suivant de la porte, **caractérisé en ce que** pour optimiser le temps d'ouverture de la porte, outre la période de retour de porte, au moins une autre valeur caractéristique est détectée et est évaluée par la commande, dans lequel la fréquence d'interruptions du barrage photoélectrique à l'au moins une porte d'ascenseur est détectée comme autre valeur caractéristique et est évaluée par la commande et / ou **en ce que** comme autre valeur caractéristique, la fréquence du déclenchement de contacts réversibles sur les portes de l'ascenseur sur l'au moins une position d'arrêt est détectée et est évaluée par la commande.

2. Procédé de commande d'un ascenseur selon la revendication 1, **caractérisé en ce que** l'optimisation du temps d'ouverture de la porte est réalisée pour chaque porte d'ascenseur.

3. Procédé de commande d'un ascenseur selon l'une des revendications précédentes, **caractérisé en ce que** l'optimisation du temps d'ouverture de la porte est réalisée individuellement pour chaque position d'arrêt.

4. Procédé de commande d'un ascenseur selon l'une des revendications précédentes, **caractérisé en ce que** l'optimisation du temps d'ouverture de porte se produit en fonction du moment de la journée, de la date, et / ou de la saison.

5. Procédé de commande d'un ascenseur selon l'une des revendications précédentes, **caractérisé en ce que** l'optimisation du temps d'ouverture de porte se produit en fonction d'une statistique de circulation de l'ascenseur détectée par la commande.

6. Procédé de commande d'un ascenseur selon l'une des revendications précédentes, **caractérisé en ce que** l'optimisation du temps d'ouverture de porte est limitée par une valeur prescrite minimale pour le temps d'ouverture de porte.

7. Procédé de commande d'un ascenseur selon l'une des revendications précédentes, **caractérisé en ce que** la valeur prescrite pour le temps d'ouverture suivant est augmentée d'une mesure prédéfinie, lorsqu'au sein d'une période de temps prédéfinie après suppression d'un appel extérieur, aucun appel intérieur ne se produit.

8. Procédé de commande d'un ascenseur selon l'une des revendications précédentes, **caractérisé en ce que** la valeur prescrite pour le temps d'ouverture de porte suivant est augmentée d'une mesure prédéfinie, lorsqu'au sein d'une période de temps prédéfinie après suppression d'un appel extérieur un déclenchement accru des barrages photoélectriques et / ou des contacts réversibles est détecté.

9. Procédé de commande d'au moins un ascenseur avec une commande, qui commande l'ascenseur de manière telle que celui-ci peut être basculé dans au moins un mode d'économie d'énergie, **caractérisé en ce qu'**une statistique de circulation sur la fréquence de déplacements est établie par la commande, qui est utilisée pour optimiser le moment d'activation de l'au moins un mode d'économie d'énergie de l'ascenseur, les consommateurs étant arrêtés dans au moins un mode d'économie d'énergie.

10. Procédé de commande d'un ascenseur selon l'une des revendications précédentes, **caractérisé en ce que** pour optimiser la consommation d'énergie différents modes d'économie d'énergie sont activés en fonction de la statistique de circulation.

11. Procédé de commande d'un ascenseur selon l'une des revendications précédentes, **caractérisé en ce que** les ascenseurs d'un groupe d'ascenseurs sont basculés en cascade en modes d'économie d'énergie en fonction de la statistique de fonctionnement.
